Europäisches Patentamt

**European Patent Office**

Office européen des brevets

(19)

(11) Numéro de publication: **0 151 889**

A1

(12) # DEMANDE DE BREVET EUROPEEN

(21) Numéro de dépôt: 84400275.8

(22) Date de dépôt: 10.02.84

(51) Int. Cl.⁴: **F 16 L 33/20**

(43) Date de publication de la demande:
21.08.85 Bulletin 85/34

(84) Etats contractants désignés:
BE DE FR GB IT NL SE

(71) Demandeur: STRATOFLEX, INC.
220 Roberts Cut-Off
Fort Worth, Texas 76114(US)

(72) Inventeur: Cooke, Horise Milton
3706 Redbud Drive
Weatherford Texas 76086(US)

(74) Mandataire: Wagret, Jean-Michel et al,
Propi Conseils 23 rue de Léningrad
F-75008 Paris(FR)

(54) **Raccord de tuyau et son procédé de montage.**

(57) – Le raccord comporte un ensemble douille-manchon (10) et un jeu de garnitures interchangeables (31), l'ensemble douille-manchon délimite un espace annulaire (36) qui reçoit une section terminale (12) du tuyau, et la garniture est positionnée à l'intérieur de l'espace annulaire et autour de la section terminale du tuyau, chaque ensemble douille-manchon est réalisé pour être utilisé avec une taille de tuyau particulière (diamètre intérieur du tuyau) et étant fourni en association avec un jeu de garnitures de différentes épaisseurs et formes, les garnitures étant adaptées à l'utilisation pour différents types et épaisseurs de tuyaux, et, avant l'assemblage du raccord (10, 21, 31) et du tuyau (12), un assemblage pouvant être fixé au tuyau dans le cas où ce dernier comporte une armature, l'attache empêchant l'armature de s'effilocher et de s'évaser et formant partie de l'ensemble du raccord et tuyau une fois assemblé.

EP 0 151 889 A1

0151889

RACCORD DE TUYAU ET SON PROCEDE DE MONTAGE

L'invention concerne un raccord de tuyau et son procédé de montage. On connait des assemblages de raccord et de tuyau constitués d'un tuyau flexible pourvu d'une armature, et d'un raccord métallique fixé à l'extrêmité du tuyau. Le tuyau comporte habituellement un tube intérieur flexible entouré par une armature qui peut être une couche de fils métalliques ou de tissus, et quelquefois une enveloppe extérieure est prévue autour de l'armature. Le raccord comporte un manchon intérieur qui s'étend dans le tube intérieur et une douille qui entoure l'armature. La douille et le manchon compriment les tuyaux entre eux afin de former un joint pressé entre le manchon intérieur et le tube, et afin de fixer fermement le tuyau au raccord.

Dans les assemblages à pression relativement faible et moyenne, l'armature et le tube intérieur sont comprimés ensemble afin d'obtenir un joint étanche et une fixation. Pour des utilisations à haute pression et pour des dispositifs hydrauliques susceptibles d'être soumis à des pulsations de pression, la partie d'extrêmité de l'armature en fils métalliques est dénudée et comprimée fermement entre la douille et le manchon intérieur afin de former une double liaison métal - métal. Un joint étanche de compression est réalisé en pressant le tube intérieur contre le manchon intérieur. Les brevets US n° 3 347 571 et n° 3 423 109 de T.L. New montrent des exemples de tels assemblages ; ce dernier brevet montre également un joint du type presse étoupe qui vient seconder le joint d'étanchéité normal à compression.

2

0151889

Dans les réalisations mentionnées ci-dessus, la valeur de la compression sur le tube intérieur est généralement critique. Si la compression est trop faible, on n'obtiendra pas de joint étanche, et pour les assemblages à faible et moyenne pression, le tuyau pourrait "éjecter" le raccord. Par contre, si la compression est trop élevée, la pression sur le tube intérieur sera excessive et il se fissurera, entrainant des fuites au niveau de l'assemblage.

L'obtention du degré de compression désiré est particulièrement difficile dans le cas d'assemblage haute pression de grande taille, car ils présentent fréquemment des variations d'épaisseur d'un tronçon à l'autre et quelquefois d'une section à l'autre du même tronçon. Dans le passé, les tuyaux de grand diamètre, tels que les tuyaux à haute pression de 2 et 1,5 pouces de diamètre (5,1 cm et 3,8 cm) utilisés comme tuyaux de forage rotatif, sont fréquemment épaissis en rapportant plusieurs couches superposées avant d'être fixés au raccord, évitant ainsi de difficultés dues aux variations de tailles. Le raccord montré dans le brevet US précédemment mentionné au nom de T.L. New n° 3 423 109 a été également utilisé avec des tuyaux spécialement réalisés et renforcés par la superposition de plusieurs couches. Le principal problème soulevé par l'utilisation de tels tuyaux à plusieurs couches est que les extrémités du tuyau étant ainsi spécialement adaptées en épaisseur, le tuyau n'est utilisable que pour des longueurs de tuyaux données. En d'autres termes, le tuyau ne peut être fourni en grandes longueurs susceptibles d'être coupées en sections plus petites selon les besoins. De plus, si une section d'un tel tuyau est endommagée, il n'est pas possible de découper la section endommagée et d'utiliser le tuyau restant au même niveau de pression.

Il serait bien entendu avantageux d'utiliser des tuyaux ayant "des extrêmités droites" (c'est-à-dire non renforcés par la superposition de plusieurs couches), mais les variations précédemment mentionnées de l'épaisseur de la paroi du tuyau rend cet usage difficile. Il serait possible d'ajuster de telles variations d'épaisseurs en réalisant une partie du raccord, tel que la douille, selon une pluralité de dimensions pour chaque taille de tuyau, mais cette disposition serait très onéreuse et nécessiterait un très grand stock. De même, les matrices d'emboutissage sont très onéreuses bien qu'elles puissent être fournies dans des tailles variées pour emboutir la partie du raccord destinée à être fixée sur le tuyau.

Un objet général de la présente invention est de fournir un dispositif et un procédé améliorés d'assemblage, qui évite les problèmes mentionnés précédemment.

Un autre objet de l'invention est de fournir un dispositif et un procédé dans lequel les raccords sont fixés à des tuyaux à extrêmités droites, pourvus d'armature sous forme de fils câbles à enroulement spirale ou bien tressé, et dans lesquels les fils métalliques renforcés aux extremités découpées du tuyau ne peuvent ainsi s'effilocher.

L'appareil selon la présente invention comprend un raccord destiné à être fixé à une section d'extrêmité d'une longueur de tuyau, le raccord comprenant un ensemble douille-manchon intérieur et une garniture. L'ensemble douille-manchon comporte une partie de manchon tubulaire prévue pour être insérée dans la section d'extrêmité du tuyau, et une partie formant douille cylindrique qui s'ajuste sur la section d'extrêmité du tuyau et autour de la partie tubulaire formant manchon, les parties formant douille et manchon délimitant un espace annulaire entre eux. La garniture est

0151889

disposée entre la partie formant douille et la paroi extérieure de la section d'extrêmité du tuyau. Le raccord est fixé au tuyau en réduisant la largeur de l'espace annulaire afin de comprimer la section d'extrêmité du tuyau entre la garniture et la partie formant manchon.

Le raccord est pourvu en combinaison d'un groupe de garnitures interchangeables, dont les formes de réalisation diffèrent dans leur configuration et l'épaisseur des parois. Chaque garniture est adaptée à un type et/ou une épaisseur particulière de tuyau. En conséquence, un ensemble douille-manchon et un jeu de matrices peuvent être utilisés pour une pluralité de tuyaux différents en configuration et en épaisseur de paroi, en choisissant une garniture appropriée parmi le groupe.

Selon un exemple de réalisation de l'invention, le tuyau est fixé au raccord en comprimant l'armature et le tube intérieur. Selon une autre forme de réalisation, une portion d'extrêmité de l'armature en fil métallique est dénudée et les garnitures comportent des moyens pour plier et serrer l'extrêmité dénudée. Selon encore une autre variante, un collier est fixé au tuyau afin d'empêcher l'effilochement du fil métallique, et le collier devient un moyen de pliage et de serrage du raccord.

Les précédents et autres objets et avantages de la présente invention découleront de la description détaillée suivante, en se référant au dessin annexé dans lequel :

- la figure 1 est une vue en élèvation d'un assemblage selon l'invention de tuyau et raccord achevés, partiellement en section.

- la figure 2 est une vue en coupe de l'assemblage avant achèvement.

**0151889**

## DESCRIPTION DETAILLEE

Dans les réalisations décrites ci-après, un raccord est fixé à un tuyau par déformation de celui-ci pour réduire le diamètre de la douille et d'une garniture du raccord. Tandis que le terme "estampage" est fréquemment utilisé ici pour décrire le procédé utilisé pour déformer le raccord, il est bien entendu que d'autres procédés, tel que le sertissage, peuvent être utilisés à cette fin et que le terme "estampage" inclut en fait de tels autres procédés.

Le terme "garniture" désigne un élément rapporté sur la paroi intérieure de la douille et jouant le rôle de pièce intermédiaire entre la douille et le tuyau et assurant la prise sur le tuyau, lors du serrage par emboutissage, grâce aux dents prévues sur la paroi interne dudit élément. Cet élément sera désigné dans la suite par le terme de garniture.

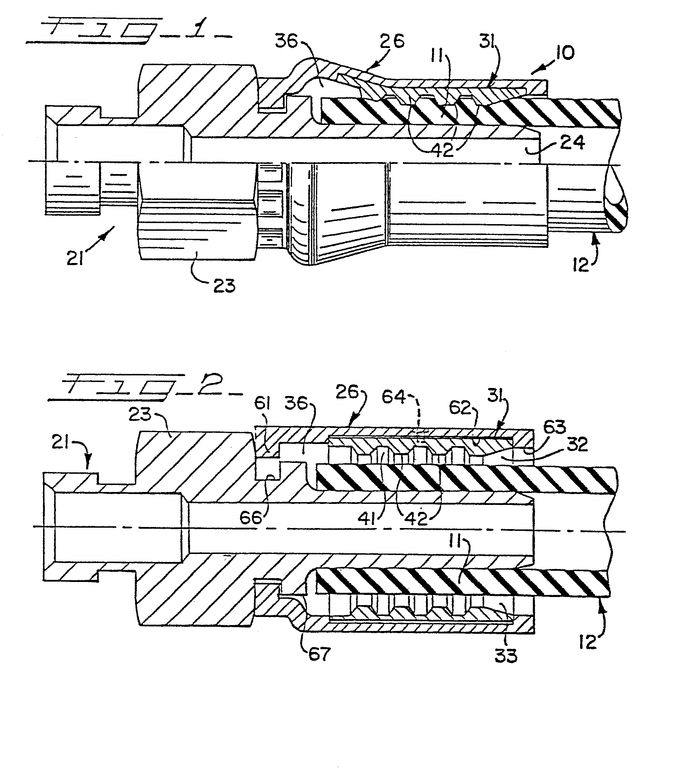

Dans les réalisations montrées sur les figures 1 à 9, la partie du raccord qui comprime le tuyau pour obtenir un joint étanche de compression, est également la partie qui fixe ou lie le raccord au tuyau.

En se référant d'abord aux figures 1 à 3, la référence numérique 10 indique un ensemble douille-manchon qui est fixé à la section terminale 11 d'une longueur de tuyau 12. Le tuyau 12, dans cet exemple spécifique de l'invention, comporte un tube en matériau élastique, tel que du plastique, caoutchouc, caoutchouc synthétique ou analogue et le tube peut comporter ou non une ou plusieurs couches d'armature (non représentées) noyées à l'intérieur ou disposées à l'extérieur du tube.

L'ensemble douille-manchon 10 comporte un élément 21 de raccordement qui est destiné à être connecté à un autre élément de raccordement (non représenté). Il comporte en outre un élément 23 susceptible de s'engager dans une clef hexagonale, et qui peut être utilisé afin de maintenir le raccord tandis que l'on fixe le raccord à l'autre élément de couplage. L'ensemble douille-manchon 10 comporte en outre un élément tubulaire 24 formant manchon qui est dimensionné pour être inserré commodément dans la section terminale 11 du tuyau 12, et un élément 26 extérieur cylindrique formant douille qui est dimensionné pour s'ajuster autour des parois extérieures de la section terminale 11 du tuyau 12.

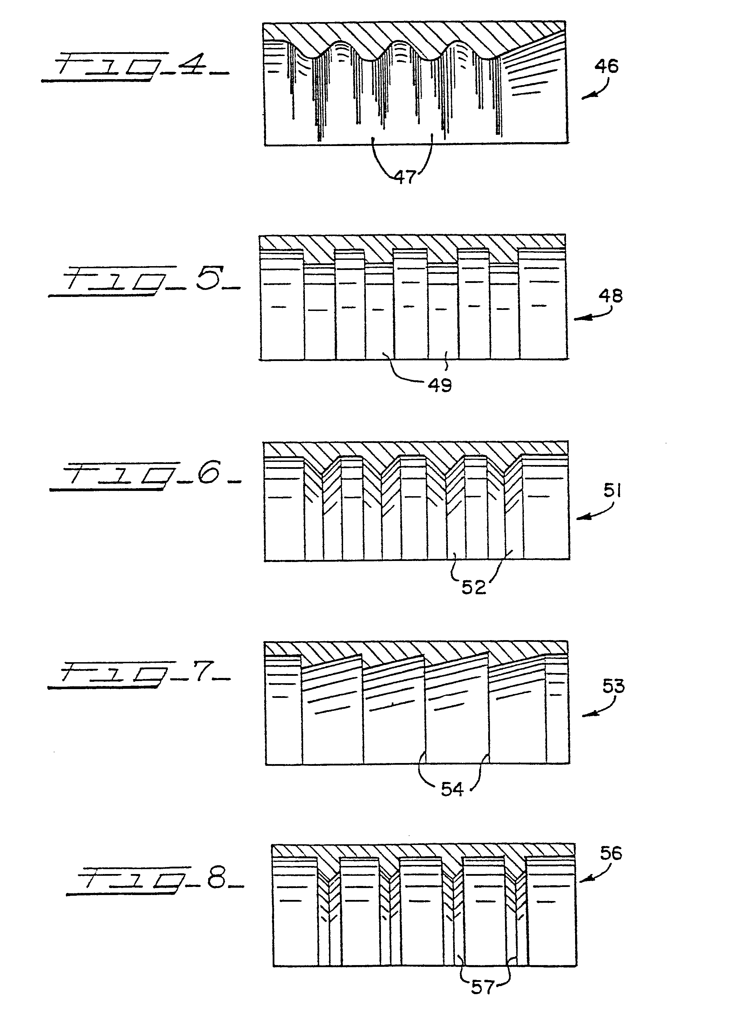

Dans l'exemple spécifique illustré sur les figures 1 à 3, l'ensemble douille-manchon 10 présente une construction en deux parties dans lesquelles l'élément 24 tubulaire formant manchon, la partie 23 hexagonale et l'élément 21 de raccordement sont en une seule pièce, et l'élément 26 formant douille est en une pièce séparée. L'élément 26 formant douille et l'élément 24 formant manchon, avant achèvement de l'assemblage, sont distants et délimitent un espace annulaire 36, qui est fermé suite à l'assemblage complet, à l'extrêmité arrière (l'extrêmité gauche conformément aux figures 1 et 2), l'espace 36 étant suffisamment large (avant l'assemblage) pour recevoir la section terminale 11 du tuyau et une garniture 31 (figures 1 à 3) formée en une ou plusieurs pièces. Dans le présent exemple, la garniture 31 comporte deux moitiés 32 et 33 identiques et semicylindriques. Ainsi que mieux montré sur la figure 2, les deux moitiés 32 et 33 s'étendent autour de la section terminale 11 du tuyau 12 et sont disposées entre le tuyau et l'élément 26 formant douille. La longueur de la garniture 31 est sensiblement la même que la longueur de la section terminale 11 du tube mais est plus petite que la longueur axiale de l'espace 36.

**0151889**

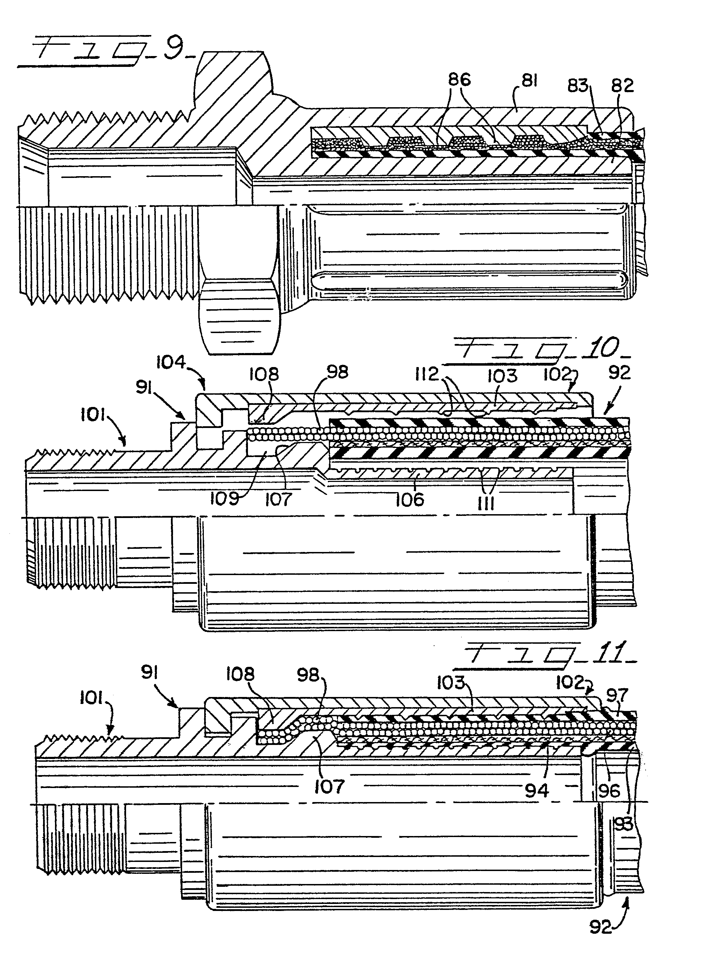

Les deux moitiés 32 et 33 de la garniture 31 comportent une pluralité de dents annulaires 42 s'engageant dans le tuyau, formées sur leur périphérie intérieure, et des gorges peu profondes 41 sont disposées entre les dents 42 séparées axialement. Ainsi que représenté sur les figures 2 et 3, les dents 42 des deux moitiés sont alignées lorsqu'elles sont assemblées du fait que les deux moitiés sont identiques. Dans l'exemple représenté sur les figures 1 à 3, la forme et la hauteur radiale des dents 42 sont dimensionnées pour être utilisées en association avec un tuyau non armé.

Chaque garniture est disponible en deux ou plusieurs tailles d'épaisseur radiale, en vue d'une utilisation avec des tuyaux d'épaisseur de paroi différente. Les tailles de garniture diffèrent par l'épaisseur de la paroi, c'est-à dire la dimension radiale entre le diamètre intérieur de la dent et le diamètre extérieur de la garniture. Les diamètres extérieurs des garnitures sont cependant normalement constants, pour une taille de tuyau donnée. Bien entendu, pour un tuyau de petites dimensions (c'est-à-dire ayant une largeur radiale relativement étroite), une garniture relativement épaisse pourra être utilisée pour obtenir la compression souhaitée, et une garniture relativement mince pourra être utilisée avec un tuyau présentant une largeur radiale relativement grande.

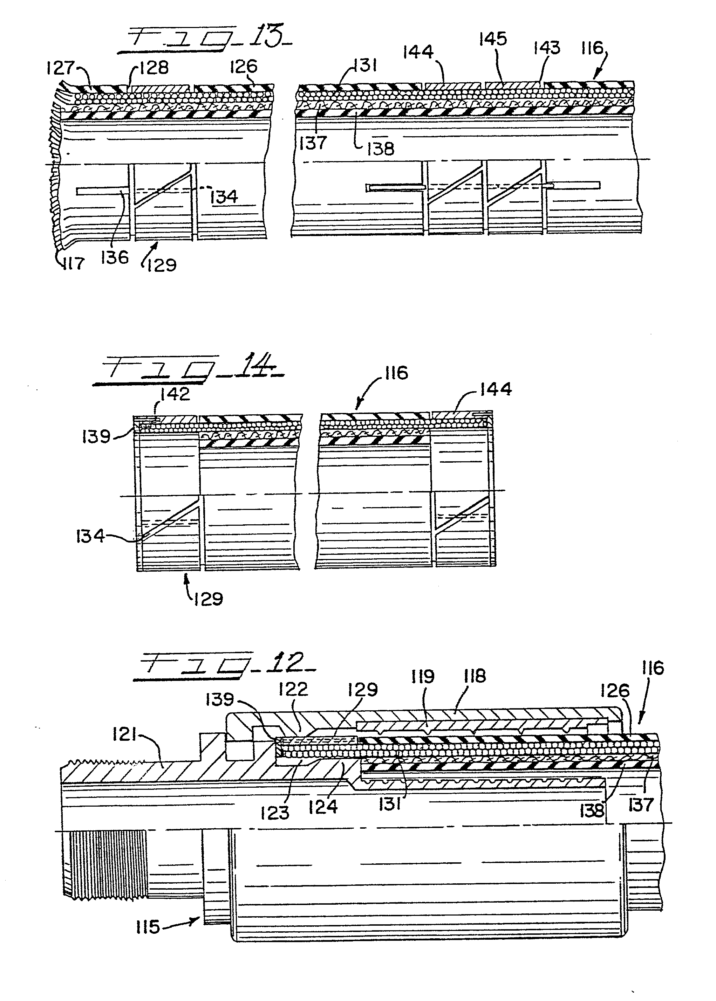

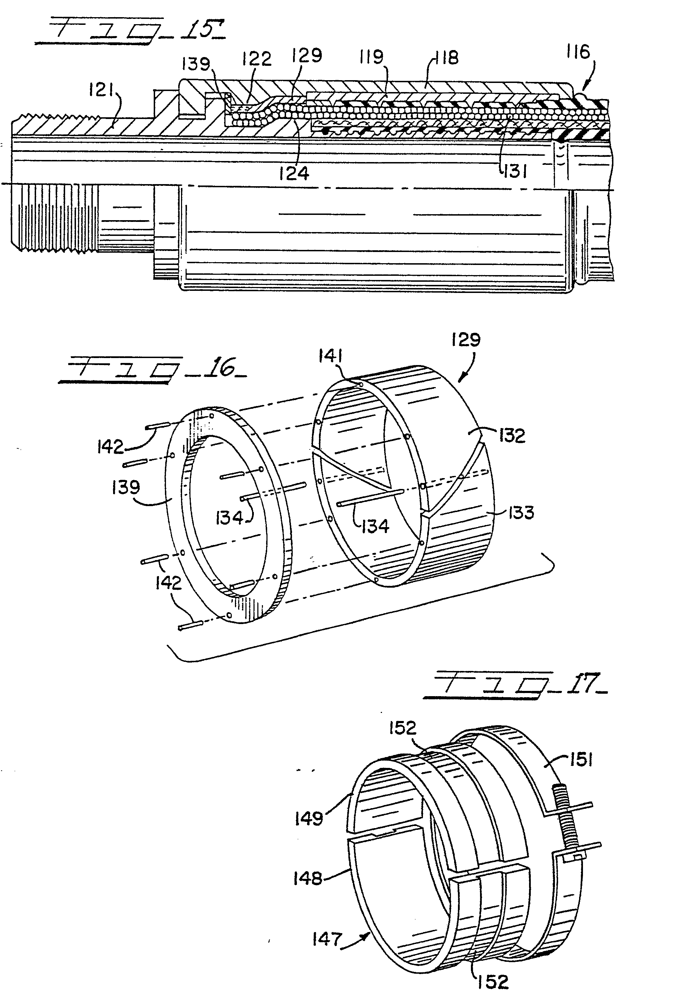

De plus, d'autres configurations de garnitures peuvent être réalisées pour convenir à d'autres types de tuyau, ainsi qu'illustré sur les figures 4 à 8. La figure 4 montre une garniture 46 comportant des dents 47 arrondies destinées à être utilisées avec un tuyau renforcé en tissu ; la figure 5 montre une garniture 48 comportant des dents 49 carrées destinées à être utilisées avec un tuyau en matière synthétique tel que du nylon ; la figure 6 montre une garniture 51 comportant des dents 52 pointues destinées à être utilisées avec une armature en fil métallique dénudé.

La figure 7 montre une garniture 53 comportant des dents de scie 54 destinées à l'utilisation avec un recouvrement en tissu dénudé ; et la figure 8 montre une garniture 56 comportant des dents allongée pointues 57 destinées à l'utilisation avec un tuyau ayant un recouvrement élastique sur une armature en fil métallique. Ainsi, pour une taille donnée de tuyau, une pluralité de configuration de garnitures différentes peut être prévue et chaque configuration de garnitures peut être conçue dans une gamme différente d'épaisseur radiale différente.

Considèrant le procédé d'assemblage et l'utilisation de l'exemple spécifique montré sur les figures 1 à 3, pour un tuyau d'une taille et d'un type donné, cette taille étant le diamètre interne du tuyau 12, l'ensemble manchon-douille 10 est choisi pour s'ajuster à la taille du tuyau. Lorsque ceux-ci sont correctement ajustés, l'élément 24 formant manchon s'engage commodément avec la surface interne du tuyau 12 et l'élément 26 formant douille est distant de la surface extérieure du tuyau. Ainsi que mentionné précèdement, chaque ensemble manchon-douille est conçu en combinaison avec un groupe ou un jeu de garnitures interchangeables de différentes configurations et tailles. Dans ce groupe, on choisit la configuration de garnitures appropriée pour le type de tuyau. La largeur radiale de la paroi du tuyau est ensuite mesurée et on choisit une garniture dimensionnée pour s'ajuster à la largeur de la paroi, pour obtenir le degré désiré de compression du tuyau.

Avant l'assemblage avec le tuyau, l'élément 26 formant douille présente la forme montrée sur la partie supérieure de la figure 2. La partie terminale de l'élément 26 comporte une collerette 61 s'étendant radialement vers l'intérieur et une partie intérieure 62 évidée et droite qui est dimensionnée en longueur afin de recevoir la garniture 31. Avant ou après l'assemblage de l'élément

**0151889**

formant douille avec la garniture, une autre collerette 63 est formée à l'extrêmité avant de l'élément 26 formant douille, et celle-ci peut être réalisée par une opération de pré-sertissage ou d'usinage. Les deux moitiés de garnitures sont disposées dans les évidements 62 arrières de la collerette 63 et pour des raccords de plus grande taille, les garnitures sont de préférence maintenues en place dans l'évidement, par exemple par un jeu de vis 64 (figure 2) ou un point de colle.

Dans cette disposition spécifique, l'élément 24 formant manchon et l'élément 26 formant douille, sont fixés ensemble par une construction bride-gorge, constituée par la collerette 61 de l'élément formant douille et d'une gorge gorge 66 annulaire entre l'élément 24 formant manchon et la partie 23 hexagonale. Une bride 67 est formée par la gorge 66, d'un diamètre légèrement plus petit que le diamètre intérieur de la collerette 61.

Le tuyau et le raccord sont assemblés comme suit, mais pas nécessairement dans l'ordre donné :

La garniture 31, l'élément 24 formant manchon et l'élément 26 formant douille, sont formés par exemple par usinage à la forme montrée dans la moitié supérieure de la figure 2 ; les garnitures sont montées dans l'évidement 62 de l'élément 26 formant douille ; l'élément formant douille et les garnitures sont mis en position sur l'élément 24 formant manchon ainsi que montré sur la partie supérieure de la figure 2 ; la collerette 61 est déformée dans la gorge 66 par exemple par une opération de pré-sertissage ainsi que montré sur la moitié inférieure de la figure 2 ; le tuyau 12 est inserré dans l'espace annulaire 36, et la partie 26 formant douille et la garniture 31 sont déformées radialement vers l'intérieur ainsi que montré sur la figure 1, par exemple par une opération d'estampage.

Les matrices de déformation choisies pour assembler le raccord sont adaptées aux tailles du raccord et du tuyau pour réduire le diamètre extérieur de l'élément 26 formant douille à une taille donnée, et seulement un simple jeu de matrices est nécessaire pour chaque taille de raccord, car les différentes épaisseurs des garnitures sont suceptibles de compenser les variations en épaisseur des parois du tuyau. Avec le degré désiré de compression du tuyau, ce dernier est fixé sur le raccord et on obtient un joint étanche de compression entre le tuyau et la garniture, sans endommager le tuyau.

La figure 9 montre un raccord similaire de façon générale mais un ensemble douille-manchon différent. La douille 81 et le manchon 82 sont usinés à partir d'une pièce métallique unique. Le tuyau 83 comporte une armature tressée métallique et dénudée qui s'engage avec les dents 86 de la garniture afin d'obtenir une prise plus sûre sur le tuyau en vue d'application à plus haute pression. La douille comporte une collerette radiale similaire à la collerette 63, qui empêche la douille d'être éjectée lors de l'utilisation.

Les figures 10 et 11 illustrent un raccord 91 pour l'utilisation avec un tuyau 92 de large diamètre pour haute pression. Un tel assemblage de tuyau et raccord peut être utilisé, par exemple, comme tuyau de forage rotatif et comme tuyau hydraulique de large calibre (tel que 2 pouces et demi, soit environ 6,35 cm) qui est soumis à des pulsations de pression. Le tuyau 92 comporte un tube intérieur élastique 93, des couches de tissu à mailles serrées 94, des couches d'armature en fil métallique 96, et un recouvrement extérieur 97. Les fils métalliques 96 montrés sur les figures 10 et 11 sont de préférence un enroulement en spirale, bien qu'ils puissent être tressés. A l'extrémité du tuyau, une partie des couches 93, 94 et 97 sont enlevées afin de dénuder une section terminale 98 de l'armature de fils métalliques.

Le raccord 91 comporte un manchon 101, une douille extérieure 102 et une garniture 103 constituée de plusieurs pièces. Le manchon et la douille sont destinés à être fixés ensemble par une bride dans la rainure 104, et les éléments de raccord sont fixés ensemble et le tuyau 92 par estampage de la douille 102 radialement et vers l'intérieur. La partie 106 du manchon qui s'étend dans l'intérieur du tuyau, est conçue de manière à présenter un diamètre réduit afin que le manchon puisse être aisément inséré dans le tuyau 92.

La partie 106 du manchon 101 présente une nervure 107 s'étendant radialement vers l'extérieur, et adjacente mais séparée de l'extrémité arrière de l'espace annulaire entre la douille et le manchon. La longueur de la section dénudée 98 du fil métallique est dimensionnée par rapport à la position de la nervure 107 de façon que la section 98 s'étende par dessus ladite nervure 107 jusqu'à l'extrêmité arrière de l'espace annulaire, et les couches 93, 94 et 97 se terminent juste en avant de la nervure 107.

La garniture 103 est similaire aux garnitures décrites précédemment excepté qu'elle comporte en outre une nervure 108 s'étendant radialement vers l'intérieur à son extrêmité arrière. Un espace 109 annulaire de diamètre réduit est formé entre la nervure 107 et l'extrêmité arrière de l'espace annulaire du raccord, et la nervure de la garniture Du fait de la taille du tuyau et de l'importance de l'armature, il serait difficile de réaliser cet assemblage initial si il était nécessaire de déformer le tuyau, mais cette difficulté est évitée par la partie 106 de diamètre réduit du manchon. L'extrêmité coupée d'une armature de fils métalliques roulés en spirale ou tressés aura tendance à s'effilocher quelque peu lorsque les couches 93, 94 et 97 seront enlevées, mais l'effilochement n'est normalement pas suffisant pour empêcher l'assemblage des éléments.

Un mandrin conventionnel à expansion (non représenté) est ensuite introduit à force au-travers du manchon 101 afin de provoquer l'expansion de la section 106 et son engagement ferme avec le tuyau. Ainsi que montré sur la figure 11, le diamètre intérieur final du manchon est approximativement égal au diamètre intérieur du tuyau de façon que l'on obtienne au-travers du raccord un "écoulement fluide".

Le diamètre de la douille 102 et de la garniture 103 est ensuite réduit, de préférence par une opération d'estampage en deux temps. La section de fils métalliques dénudés 98 et les deux nervures 107 et 108 constituent une "section de serrage" tandis qu'une double liaison métal - métal est formée. Ainsi que montré sur la figure 11, la section 108 de fils métalliques dénudés est à la fois compressée et pliée ou courbée entre les deux nervures 107 et 108 dans la section de serrage, formant ainsi une liaison sûre entre le tuyau et le raccord.

Les portions du manchon et de garniture situées en avant de la section de serrage compriment le tuyau et forment un joint étanche de compression entre le manchon et le tube 93 intérieur. Une pluralité de gorges annulaires 111 sur le manchon améliore le joint d'échanchéité. Plusieurs dents 112 prévues sur la garniture et mordent sur l'enveloppe extérieure 97 et aident également au serrage du tuyau. Dès que l'on obtient une compression satisfaisante sur le tube intérieur, on aboutit à un joint étanche de compression efficace et un joint d'étanchéité du type presse-étoupe de renfort n'est pas nécessaire.

Ainsi que précédemment mentionné, avant l'assemblage de la garniture 103 avec la douille 102, on mesure l'épaisseur radiale du tuyau. Une pluralité de garnitures 103 sont prévues dans une gamme d'épaisseur radiale de la partie de la garniture qui coopère avec la couche de recouvrement 97, et on choisit une garniture susceptible de produire une compression adéquate sur les parties élastiques ou molles du tuyau. L'épaisseur radiale de la couche 96 de fils métalliques est relativement uniforme, et les hauteurs et l'espacement entre les nervures 107 et 108 sont conçues pour chaque type et taille de tuyau.

Les figures 12 à 16 illustrent un exemple de réalisation de l'invention préférée pour des tuyaux à haute pression de grand calibre. Tandis que cette forme de réalisation peut être utilisée avec des tuyaux à fils métalliques tressés et en spirale, il est particulièrement avantageux de l'employer avec des tuyaux renforcés à l'aide de câbles métalliques indiqués par la référence 116 dans les figures 12 à 15. Un tel fil métallique présente un large évasement à une extrêmité coupée 117 (figure 13) et lorsque les couches intérieures et extérieures du tuyau sont enlevées afin de dénuder une section terminale du tuyau, similaire à la section 98 dénudée du tuyau 92, l'évasement ou l'effilochement est si grand que le tuyau ne peut être inséré dans le raccord et assemblé ainsi que décrit en se référant aux figures 10 et 11.

En se référant à la figure 12, le raccord 115 comporte une douille 118, une garniture 119 et un manchon 121. Le manchon 121 peut être le même que le manchon 101. La garniture 119 est la même que la garniture 103 excepté qu'elle ne s'étend pas en arrière dans la section de serrage et par-dessus la section terminale dénudée du tuyau 116 et, bien entendu, la garniture 119 ne comporte pas en conséquence de nervures radiales annulaires similaires à la nervure 108. Une nervure annulaire 122 est cependant prévue sur la périphérie intérieure de la douille 118 et est située au-dessus de l'espace 123 entre la nervure annulaire 124 et les manchons 121 et l'extrêmité arrière de l'espace annulaire du raccord.

Les figures 13 et 14 montrent la préparation du tuyau 116 avant l'assemblage avec le raccord 115. Avant de couper une section 126 du tuyau à une longueur voulue, une pièce annulaire de l'enveloppe extérieure 127 est enlevée afin de former une découpe ou espace annulaire 128. La découpe 128 est disposée à une courte distance de l'extrêmité du tuyau et est placée loin de l'extrêmité dénudée 117. Une attache 129, telle qu'une bride ou une bague, est postionnée sur la découpe 128 et est fermement maintenue autour de l'extérieur de la couche d'armature en fils métalliques 131 du tuyau.

Ainsi que montré sur la figure 16, l'attache est une bague fendue comportant deux moitiés 132 et 133. Les bords jointifs des moitiés sont biseautés et des chevilles sont insérées dans des trous alignés prévus sur les bords afin de solidariser les deux moitiés ensemble. La figure 13 montre une fente axiale 136 formée dans l'enveloppe 126 qui permet l'insertion des chevilles. Après que la bague soit mise en place, la partie terminale du tuyau est découpée à ras du côté gauche, comme vu sur les figures 13 et 14, de la bague. La bague bien sûr retarde l'évasement ou l'effilochement extérieur des fils métalliques après découpage.

Les cables métalliques tendent à se redresser et s'évaser lorsque les couches intérieures 137 et 138 du tuyau sont enlevées, même en présence de l'attache 129. Afin d'empêcher un tel évasement, une bride annulaire 139 (figures 12, 14, 15 et 16) est solidarisée aux moitiés 132 et 133 avant l'enlèvement des couches intérieures, et ladite bride recouvre les extrêmités découpées des fils métalliques. Des trous 141 sont prévus dans les moitiés et la bride, et des goupilles ou vis 142 sont disposées dans lesdits trous afin de fixer la bride aux moitiés. Ainsi que montré sur la figure 14, la largeur radiale de la bride est sensiblement égale à celle de la couche de fils métalliques et elle empêche les fils métalliques de s'effilocher.

Des attaches et brides similaires sont solidarisées au tuyau lorsque l'on découpe ce dernier. Lors de la réalisation d'une découpe près du centre du tuyau 116, une découpe 143 plus large peut être réalisée dans l'enveloppe extérieure et deux attaches adjacentes 144 et 145 sont placées sur le tuyau et la découpe est réalisée entre les deux attaches.

En se référant aux figures 12 à 15, le tuyau et le raccord sont assemblés de façon similaire à l'assemblage illustré sur les figures 10 et 11. L'attache présente une longueur axiale qui est approximativement égale à la longueur de la section de serrage du raccord, et l'attache s'étend entre les nervures 122 et 124. Lorsque le raccord est déformé ainsi que montré sur la figure 15, les moitiés 132 et 133 sont pliées dans le sens de la longueur avec les fils métalliques et l'attache fait alors partie de l'assemblage. Normalement la bride 139 est brisée et se détache des moitiés 132 et 133 tandis que les parties sont déformées et les goupilles 142 se plient ou se cassent. La nervure 122 de la douille 118 peut être légèrement plus petite que la nervure 108 afin de s'adapter à la largeur radiale de l'attache 129.

On peut utiliser des types variés d'attache. La figure 17 montre une variante d'attache 147 comportant deux moitiés semi-circulaires 148 et 149 et un collier serrable 151. Les deux moitiés 148 et 149 présentent de préférence des gorges 152 sur leur périphérie extérieure et destinées à recevoir le collier 151 lorsqu'elles sont montées sur le tuyau, et ledit collier 151 est alors serré pour fixer les moitiés.

Les réalisations montrées sur les figures 10 à 17 sont en conséquence très avantageuses lorsqu'elles sont employées avec des tuyaux à haute pression tels que des tuyaux pour sondage rotatif et des tuyaux hydrauliques à grand diamètre. Le tuyau peut être réalisé en grande longueur et coupé en section plus petite à la demande sur le terrain. Ceci présente un grand avantage par rapport aux dispositions de l'art antérieur où le tuyau est réalisé selon des longueurs spécifiques sur le lieu de fabrication, et ce qui constitue un procédé beaucoup plus onéreux et moins commode. Les réalisations selon la présente invention permettent également la réutilisation des parties de tuyau endommagées dans des applications à haute pression du fait qu'il n'est pas nécessaire de réaliser spécialement à l'avance des extrémités de tuyau.

Il semble évident que l'on obtienne ainsi une réalisation de raccord utile. Un ensemble douille-manchon pour une taille particulière de tuyau est fourni en association avec un jeu de garnitures, ces dernières présentant une gamme d'épaisseurs radiales différentes afin de s'adapter aux différentes épaisseurs de parois de tuyau. Les garnitures peuvent également présenter différentes configurations pour différents types de tressage par exemple. Pour une taille, une conception et une épaisseur de parois radiales du tuyau donnés, on choisit une garniture, pour cette taille, conception et épaisseur, que l'on met en place dans l'ensemble douille-manchon, et les parties sont ensuite assemblées. La garniture est un article relativement bon marché et en conséquence peut être stockée selon une grande variété d'épaisseurs de parois et de forme de dents, et puisque les éléments de garnitures sont identiques, il n'est besoin de stocker pour chaque variété qu'un seul élément de garniture. La garniture peut être en une, deux, trois ou plus éléments et elle peut être réalisée par usinage, moulage, extrusion et cintrage, etc...

Les ensembles douille-manchon et les matrices pour déformer les éléments, les plus onéreux, ne sont nécessaires que dans une variété limitée, à savoir un ensemble douille-manchon et un jeu de matrices pour chaque taille de tuyau. En plus de la réduction des stocks onéreux d'éléments et l'utilisation de garnitures pour compenser les variations d'épaisseurs de parois du tuyau et les différentes formes de tuyaux, le dispositif présente l'avantage supplémentaire de prolonger la durée de vie de l'assemblage du tuyau et raccord du fait que l'importance de la compression du tuyau peut être plus facilement maitrisée. Cette maitrise de la compression entraine également une meilleure fixation du tuyau dans le raccord et réduit les risques de fuite, et elle évite les nécessités de prévoir un joint d'étanchéité à presse-étoupe de renforcement et une extrêmité de tuyau spécialement réalisée sur mesure. Ainsi que mentionné précédemment, la compression du tuyau peut être réalisée par des mécanismes variés pour provoquer l'expansion du manchon et réduire le diamètre de la douille et des garnitures.

Comme montré sur les dessins, la garniture est placée avec un jeu relatif dans l'élément formant douille lors de l'assemblage initial de façon que l'élément formant douille et la garniture puissent être facilement assemblés à la main.

**0151889**

## REVENDICATIONS

1 - Raccord pour utilisation avec une taille spécifique de tuyau déterminée par le diamètre interne de la section d'extrêmité du tuyau, et pour utilisation avec une matrice de déformation associée à la taille du tuyau, ledit raccord étant caractérisé en ce qu'il comprend un manchon tubulaire (24) destiné à être inséré dans le diamètre interne de la section terminale du tuyau, une douille extérieure cylindre (26) mise en position autour du manchon et autour de la section terminale du tuyau (12), un ensemble de garnitures interchangeables (31) présentant une gamme d'épaisseurs différentes de parois radiales, une garniture (31) convenablement choisie dans ledit ensemble de garnitures étant mise en place entre la paroi extérieure de la section terminale du tuyau (12) et ladite douille (26), des moyens de solidarisation de ladite garniture convenablement choisie (31) à ladite douille (26), et dans lequel la douille et la garniture sont déformées de façon permanente vers l'intérieur par la matrice pour comprimer la section terminale du tuyau entre ledit manchon (24) et ladite garniture (31), cette dernière présentant une épaisseur de parois radiales en rapport avec l'épaisseur radiale de la section terminale du tuyau afin de produire une compression optimale de ladite section terminale du tuyau (12)

2 - Raccord selon la revendication 1, caractérisé en ce que chacune desdites garnitures (31) comporte une pluralité de segments de garnitures identiques (32, 33) et lesdits segments présentent des dents de serrage du tuyau disposées sur leur périphérie intérieure.

3 - Raccord selon la revendication 1, caractérisé en ce que lesdits moyens de solidarisation comportent des épaulements formés sur ladite douille (26) aux extrêmités de ladite garniture (31).

4 - Raccord selon la revendication 1, caractérisé en ce que lesdits moyens de solidarisation comportent au moins une vis (64) reliant ladite douille (26)et ladite garniture choisie (31).

5 - Raccord selon la revendication 1, caractérisée en ce que lesdits moyens de solidarisation comportent un adhésif entre ladite douille (26) et ladigarniture convenablement choisie (31).

6 - Raccord selon la revendication 1, caractérisé en ce que ladite douille (26) et ledit manchon (24) comporte des moyens (61, 66) pour solidariser ladite douille sur ledit manchon.

7 - Raccord selon la revendication 1, caractérisé en ce que ladite section terminale du tuyau (12) comporte une armature en fils métalliques (98) et au moins une paroi élastique tubulaire (96, 97), une partie de la paroi élastique tubulaire (96, 97) étant enlevée à la partie de l'extrêmité du tuyau afin de dénuder ainsi une partie d'extrêmité de l'armature en fils métalliques, et des moyens de serrage (107, 108) sur ledit ensemble manchon-garniture pour la compression, le pliage et le serrage de l'armature en fils métalliques.

8 - Raccord selon la revendication 7, caractérisé en ce que les moyens de serrage comportent des nervures annulaires (107, 108) disposées sur ledit manchon et ladite garniture.

21

0151889

9 - Raccord selon la revendication 1,
caractérisée en ce que ladite garniture comporte une bague
annulaire (129) fixée à une partie d'extrêmité dudit tuyau.

10 - Raccord selon la revendication 9,
caractérisé en ce que ladite garniture comporte également
une bride d'extrêmité (139) disposée de façon adjaçente
l'extrêmité du tuyau et fixée à ladite bague.

11 - Ensemble constitué d'un tuyau et d'un raccord selon
l'une des revendications 1 à 10, dans lequel ledit tuyau
(116) comporte un tube intérieur élastique, et une armature
(131) de fils métalliques autour dudit tube intérieur,
caractérisé en ce qu'une partie dudit tube intérieur à
l'extrêmité dudit tuyau est enlevée pour dénuder une section
terminale de ladite armature et des moyens d'attache (129)
sont fixés audit tuyau autour de ladite section terminale
dénudée (117), ledit raccord (115) comportant un ensemble
manchon-douille composé d'une partie tubulaire formant
manchon (121) et d'une douille (118) cylindrique prévue pour
s'étendre autour dudit manchon, ce dernier et la douille
étant distants l'un de l'autre pour former un espace
annulaire destiné à recevoir ledit tuyau, l'extrêmité
intérieure (123) dudit espace formant une section de serrage
qui reçoit lesdits moyens d'attache et ladite extrêmité
dénudée de ladite armature, ladite section de serrage
comportant des nervures radiales annulaires respectivement
(124) sur le manchon et (122) sur la douille, et lesdits
moyens d'attache (129) et ladite section terminale dénudée
s'étendent entre lesdites nervures, ladite douille (118)
comprimant ledit tube intérieur entre le manchon et les
moyens d'attache et comprimant également ces derniers et la
section terminale dénudée du tuyau entre les nervures par
réduction de la largeur dudit espace annulaire.

12 - Ensemble de raccord et de tuyaux selon la revendication 11,
caractérisé en ce que lesdits moyens d'accrochage comportent une bague annulaire (129) disposée autour de ladite section terminale dénudée (128).

13 - Ensemble de raccord et de tuyau selon la revendication 12,
caractérisé en ce que lesdits moyens d'accrochage comportent une bride annulaire (139) disposée contre l'extrêmité dudit tuyau et fixée à ladite bague (129).

14 - Ensemble de raccord et de tuyau selon la revendication 11,
caractérisé en ce qu'il comporte en outre une garniture entre la douille et le tuyau.

15 - Procédé pour l'assemblage d'un tuyau et d'un raccord conforme à l'une des revendications 1 à 14, du type dans lequel on déforme de façon permanente certaines parties du raccord, à l'aide de matrices de déformation, afin que lesdites parties du raccord soient comprimées sur la section terminale du tuyau, la section terminale comportant au moins une paroi tubulaire flexible et le diamètre de ladite paroi tubulaire étant en correspondance avec le diamètre des matrices de déformation,
caractérisé par la succession des étapes suivantes :

- on choisit une longueur de tuyau et une matrice de déformation associée à la taille du tuyau,

- on dispose un raccord comportant un élément tubulaire formant manchon, un élément extérieur formant douille en forme de gaine et une pluralité de garnitures cylindriques présentant des épaisseurs radiales différentes,

- on mesure l'épaisseur radiale de la paroi du tuyau et,

- on choisit une garniture parmi la pluralité de garnitures, ladite garniture choisie ayant une épaisseur radiale en relation avec l'épaisseur mesurée du tuyau,

- on met en place ladite garniture choisie à l'intérieur de l'élément formant douille,

- on positionne l'élément formant manchon à l'intérieur de la section terminale du tuyau,

- on positionne ladite garniture choisie et ledit élément formant douille autour de ladite section terminale, et,

- on déforme ledit élément formant douille et ladite garniture dans ladite matrice afin de comprimer ainsi ladite section terminale.

16 - Procédé selon la revendication 15, comportant l'étape additionnelle de solidarisation de ladite garniture audit élément formant douille avant la déformation de l'élément formant douille et de la garniture.

17 - Procédé selon la revendication 15, caractérisé en ce que le tuyau comporte une armature métallique, et incluant l'étape supplémentaire consistant à fixer une bague à une portion d'extrêmité du tuyau.

18 Procédé selon la revendication 17, caractérisé en ce qu'il comporte l'étape de positionnement d'une bride annulaire contre l'extrêmité du tuyau, et la solidarisation de ladite bride à ladite bague.

FIG_1_

36  26  11  31  10

42  24

21

23

12

FIG_2_

23  61  36  26  64  62  31  63  32

21

66  41  42  11

67  33  12

_FIG_4_                                                                    46

47

_FIG_5_                                                                    48

49

_FIG_6_                                                                    51

52

_FIG_7_                                                                    53

54

_FIG_8_                                                                    56

57

Fig.9

86  81  83  82

Fig.10

104  91  101  108  98  112  103  102  92

109  107  106  111

Fig.11

101  91  108  98  103  102  97

107  94  96  93

92

0151889

4 / 5

FIG_13_

FIG_14_

FIG_12_

_FIG_15_

_FIG_16_

_FIG_17_

Office européen
des brevets

**RAPPORT DE RECHERCHE EUROPEENNE**

Numéro de la demande

EP  84  40  0275

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl. ³) |
| A | US-A-3 589 752  (SPENCER et al.) <br> * Figures 2, 4 * | 1-3 | F 16 L  33/20 |
| | --- | | |
| A | US-A-2 341 003  (WATSON) <br><br> *  Colonne  2, lignes 15-48, figures 3, 4 * | 1,2,6, 15 | |
| | --- | | |
| A | US-A-2 797 111  (BEAZLEY) <br><br> * Figures 3, 4 * | 1,3,6, 15 | |
| | --- | | |
| A | US-A-1 924 712  (EISENMAN) <br><br><br> * Figures 1, 2 * | 1,3,7, 9,11, 12,15, 17 | |
| | --- | | DOMAINES TECHNIQUES RECHERCHES (Int. Cl. ³) |
| A | GB-A-  984 749 (SINGLEHURST ENGINEERING) <br><br> * Figures 1-4 * | 1,7,9, 11,12, 15,17 | F 16 L  33/00 |
| | --- | | |
| A | EP-A-0 073 048  (FISCHER) <br> * Figure 1 * | 1 | |
| | --- | | |
| A | US-A-3 325 194  (GRAWEY) <br> * Figures 1, 2 * | 1 | |
| | ---          -/- | | |

Le présent rapport de recherche a été établi pour toutes les revendications

| Lieu de la recherche <br> BERLIN | Date d'achèvement de la recherche <br> 19-09-1984 | Examinateur <br> SCHLABBACH M |
|---|---|---|

CATEGORIE DES DOCUMENTS CITES

X :  particulièrement pertinent à lui seul
Y :  particulièrement pertinent en combinaison avec un
autre document de la même catégorie
A :  arrière-plan technologique
O :  divulgation non-écrite

T :  théorie ou principe à la base de l'invention
E :  document de brevet antérieur, mais publié à la
date de dépôt ou après cette date
D :  cité dans la demande
L :  cité pour d'autres raisons

EB Form 1503 03.82

Office européen
des brevets

**RAPPORT DE RECHERCHE EUROPEENNE**

Numéro de la demande

EP 84 40 0275

| | DOCUMENTS CONSIDERES COMME PERTINENTS | | Page 2 |
|---|---|---|---|
| **Catégorie** | Citation du document avec indication, en cas de besoin, des parties pertinentes | Revendication concernée | CLASSEMENT DE LA DEMANDE (Int. Cl. ³) |
| A | US-A-2 031 833 (HUTCHINSON) <br> * Figures 1, 2 * <br><br> --- | 1 | |
| A | FR-A-1 495 499 (ANOFLEX) <br><br> --- | | |
| D,A | US-A-3 423 109 (NEW et al.) <br><br> * Figures 2, 3 * <br><br> --- | 7,8,11 ,15 | |
| D,A | US-A-3 347 571 (NEW) <br><br> * Figures 2-4 * <br><br> ----- | 7,8,11 ,15 | |
| | | | **DOMAINES TECHNIQUES RECHERCHES (Int. Cl. ³)** |
| Le présent rapport de recherche a ete établi pour toutes les revendications | | | |

| Lieu de la recherche | Date d'achèvement de la recherche | Examinateur |
|---|---|---|
| BERLIN | 19-09-1984 | SCHLABBACH M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

OEB Form 1503 03 82